# EUROPEAN PATENT APPLICATION

(11) **EP 4 166 586 A1**
(43) Date of publication of application: **19.04.2023**
(21) Application number: 21202547.2
(22) Date of filing: 13.10.2021
(51) Int. Cl.: C08G 10/00, C08J 5/22, B01J 41/13

(54) **ARYL-ETHER-FREE POLYAROMATIC POLYMERS WITH BRANCHED STRUCTURES FOR ANION EXCHANGE MEMBRANES**

(71) Applicant: Ecole Polytechnique Fédérale de Lausanne (EPFL), 1015 Lausanne (CH)
(72) Inventor: Wu, Xingyu, 1015 LAUSANNE (CH); Hu, Xile, 1015 LAUSANNE (CH)
(74) Representative: Schulz Junghans Patentanwälte PartGmbB

(57) **Abstract**

The present invention relates to a polyaromatic polymer that comprises multifunctional aromatic moieties MA, cationic groups CG and bifunctional aromatic moieties BA, wherein one or more CG and one or more BA form a linear unit L, and MA is connected to 3 to 6 linear units L. MA, CG and BA are defined as described in the specification. Furthermore, the present invention relates to a neutral precursor of the polyaromatic polymer and to an anion exchange membrane that comprises a polyaromatic polymer according to the invention.

## Description

The present invention relates to branched aryl-ether-free polyaromatic polymers and anion exchange membranes prepared thereof.

### Background of the Invention

Anion exchange membranes (AEM) are solid polymer electrolytes that allow for the transport of anions such as OH⁻, CO₃²⁻, Br⁻ or Cl⁻ between an anode and a cathode in an electrochemical device. AEMs are key components for fuel cells and water electrolyzers. They also have potential application e.g. in desalination, electrodialysis, batteries or sensors.

The main requirements of anion exchange membranes are adequate durability, conductivity and mechanical properties, as well as low water uptake and swelling.

Many commercial AEMs are based on polystyrene, which can be damaged under long-term operation in AEMs fuel cells or water electrolyzers. Other AEMs based on polysulfones, poly(phenylene oxide)s, poly(benzimidazolium)s, poly(arylene ether ketone)s, and poly(arylene ether sulfone) have also been reported. These polymers contain arylene ether linkage in the backbone and cationic groups such as trimethyl ammonium, benzyl trimethyl ammonium or imidazole groups in the side chain. These polymers have been proved to be unstable for long term operation because the ether group could be attacked and broken. For example, Zhang *et al.* (2021) report a loss of 20% of original conductivity after immersion in 4M KOH at 80 °C for 400h for linear ether polyaromatics with branched ionic side chains.

Recently, AEMs based on aryl-ether-free polyaromatics have been prepared. Representative molecular structures include Diel-Alder poly(phenylene), poly(perfluoroalkyl phenylene), poly(biphenyl alkylene), poly(biphenylene piperidinium), spiro-ionene and poly(mesityl-dimethyl benzimidazolium). These AEMs possess good thermal and chemical stability. For example, Lee *et al.* (2015) prepared quaternary ammonium-tethered poly(biphenyl allylene)s without alkaline labile C-O bonds and the resulting AEMs showed high hydroxide conductivity up to 120 mS/cm and good alkaline stability at 80 °C.

U.S. Patent Application 15/527,967 discloses anion exchange membranes prepared by using linear quaternized ammonium hydroxide-containing polyarylene polymers. Limitations of these membranes are their high water uptake (130 wt% at 30 °C).

Olsson *et al.* (2018) reported AEMs of the poly (aryl piperidinium) family, which loss 5% of ion exchange capacity (IEC) over 15 days at 90 °C in 2 M NaOH. Also the patent applications US 16/651,622 and CN 111269401 A disclose anion exchange membranes prepared by using linear poly(aryl piperidinium) polymers with pendant cationic groups.

However, water uptake, swelling and mechanical properties of these aryl-ether-free AEMs are poor, probably due to their relatively low molecular weights.

Despite lots of research activities trying to improve anion exchange membranes, a membrane showing high conductivity, good alkaline stability and high mechanical properties but low water uptake and low swelling has not been reported so far.

Based on the above-mentioned state of the art, the objective of the present invention is to provide means and methods for preparing improved anion exchange membranes. This objective is attained by the subject-matter of the independent claims of the present specification, with further advantageous embodiments described in the dependent claims, examples, figures and general description of this specification.

### Summary of the Invention

A first aspect of the present invention relates to a polyaromatic polymer comprising
- at least one multifunctional aromatic moiety MA that comprises 2 to 6 cyclic hydrocarbon moieties, wherein MA may be unsubstituted or substituted by one or more substituents independently selected from a C₁₋₂₀-alkyl,
- cationic groups CG that are independently selected from a moiety of formula 1 or 4, 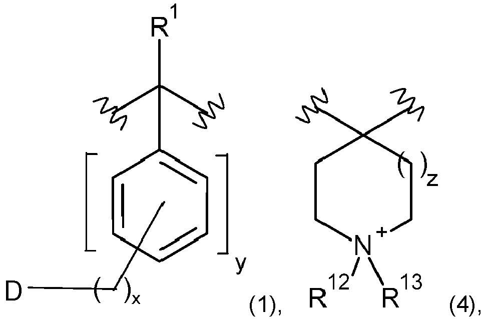
wherein
R¹ is a fully or partly fluorinated C₁₋₆-alkyl,
R¹² and R¹³ are independently of each other selected from H, C₁₋₁₂-alkyl, phenyl and C₃₋₁₀-cycloalkyl, or
R¹² and R¹³ are connected to each other to form a cycloalkyl comprising 4 to 10 C atoms,
D is selected from -N⁺(R²)₃, -P⁺(R²)₄ or a cation of piperidyl, pyrrolidinyl, imidazolyl, pyrazolyl, imidazolidinyl, wherein the cation of piperidyl, pyrrolidinyl, imidazolyl, pyrazolyl or imidazolidinyl is unsubstituted or substituted by one or more substituents independently selected from C₁₋₁₂-alkyl, phenyl,
   each R² is independently of any other R² selected from H, C₁₋₁₂-alkyl, phenyl,
y is 0 or 1,
x is an integer between 0 and 12,
z is 0 or 1,

- bifunctional aromatic moieties BA that are independently selected from a moiety that comprises 2 to 5 cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
   wherein
- one or more CG and one or more BA form a linear unit L, and
- MA is connected to 3 to 6 linear units L.

A second aspect of the invention relates to a precursor comprising
- at least one multifunctional aromatic moiety MA that comprises 2 to 6 cyclic hydrocarbon moieties, wherein MA may be unsubstituted or substituted by one or more substituents independently selected from a C₁₋₂₀-alkyl,
- neutral groups NG that are independently selected from a moiety of formula 1' or 4', 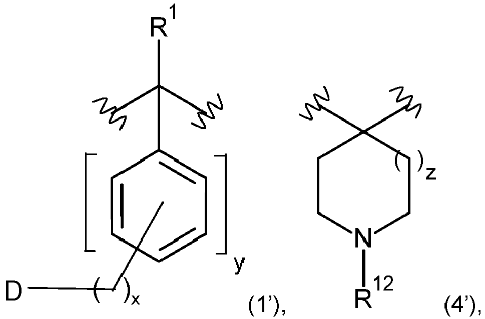
wherein
R¹ is a fully or partly fluorinated C₁₋₆-alkyl,
R¹² is selected from H, C₁₋₁₂-alkyl, phenyl, C₃₋₁₀-cycloalkyl,
D is a leaving group,
y is 0 or 1,
x is an integer between 0 and 12,
z is 0 or 1,

- bifunctional aromatic moieties BA that are independently selected from a moiety that comprises 2 to 5 cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
   wherein
- one or more CG and one or more BA form a linear unit L, and
- MA is connected to 3 to 6 linear units L.

A third aspect of the invention relates to a precursor obtained by a reaction of a reaction mixture comprising
- at least one multifunctional aromatic moiety MA that comprises 2 to 6 cyclic hydrocarbon moieties, wherein MA may be unsubstituted or substituted by one or more substituents independently selected from a C₁₋₂₀-alkyl, particularly a C₁₋₆-alkyl,
- a ketone independently selected from a moiety of formula 1k or 4k, 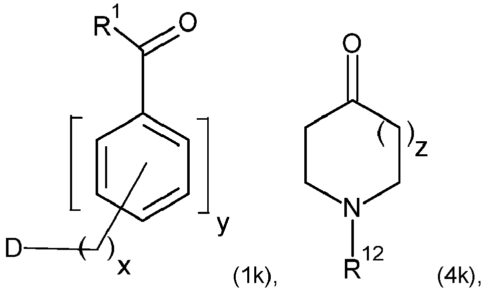
wherein
R¹ is a fully or partly fluorinated C₁₋₆-alkyl,
D is a leaving group,
y is 0 or 1,
x is an integer between 0 and 12,
z is 0 or 1,

- bifunctional aromatic moieties BA that are independently selected from a moiety that comprises 2 to 5 cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl
   wherein the reaction mixture has a pH < 1.

A fourth aspect of the invention relates to a polyaromatic polymer obtained by a reaction of a reaction mixture comprising
- the precursor according to the second or third aspect of the invention, and
- a reactant selected from
   ∘ a halogenated C₁₋₁₂-alkyl, a halogenated phenyl, or a halogenated C₃₋₁₀-cycloalkyl, or
   ∘ N(R²)₃, P(R²)₃, with R² being defined as above, or
   ∘ piperidyl, pyrrolidinyl, imidazolyl, pyrazolyl or imidazolidinyl.

A fifth aspect of the invention relates to an anion exchange membrane comprising a polyaromatic polymer according to the first or fourth aspect of the invention and a suitable counterion.

### Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising," "having," "containing," and "including," and other similar forms, and grammatical equivalents thereof, as used herein, are intended to be equivalent in meaning and to be open ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of' or "consisting of."

Where a range of values is provided, it is understood that each intervening value, to the tenth of the unit of the lower limit, unless the context clearly dictate otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a," "or," and "the" include plural referents unless the context clearly dictates otherwise.

The term *polyaromatic polymer* in the context of the present specification relates to a polymer that comprises at least one multifunctional aromatic moiety MA, cationic groups CG and bifunctional aromatic moieties BA. Within the polyaromatic polymer, MA constitutes a branching point, also referred to as "branch point intermediate" or "branch unit" (IUPAC recommendations 1997). The moieties CG and BA form linear units L. Typically, CG and BA alternate within a linear unit. The linear unit L may also be referred to as "linear chain" or "linear subchain". Within one polymer, the lengths of the linear units L may vary. At least two linear units L each bound to MA constitute a main chain or backbone (L) with at least one branch point intermediate (MA). A third linear unit L bound to MA constitutes a branch or side chain. The multifunctional moiety MA may be trifunctional, tetrafunctional, pentafunctional or hexafunctional, i.e. 3, 4, 5 or 6 linear moieties L may be bound to 1 moiety MA. If the polymer comprises more than one moiety MA, a dendritic or hyperbranched structure may be observed. Furthermore, the polyaromatic polymer comprises terminal units E, also referred to as end-groups. A terminal unit E constitutes the free end of a main chain or of a side chain. For example, one end of the first, second or third linker moiety L described above binds to a trifunctional moiety MA and the other end binds to a terminal unit E. Optionally, crosslinks may be present in the polymer. The polyaromatic polymer may comprise counterions. Particularly, the negative charge of a counterion balances the positive charge of a cationic group CG. The polyaromatic polymer according to the invention is aryl-ether-free, i.e. it does not comprise two aryl moieties that are connected to each other by -O-.

The term *multifunctional aromatic moiety* or MA in the context of the present specification relates to a moiety that comprises, particularly consist of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl. Non-limiting examples are 1,3,5-triphenylbenzene, naphthalene, biphenylene, 1H-phenalene, anthracene, phenanthrene, 1,6-dihydropyrene, 10b,10c-dihydropyrene, pyrene, 9,9'-spirobi[fluorene]. At least one, particularly all, of the cyclic hydrocarbon moieties are aromatic.

The term *cationic group* or CG in the context of the present specification relates to a moiety of formula 1 or of formula 4 as described below. The cationic groups within the polymer allow for the transport of anions between an anode and a cathode in an electrochemical device. Non-limiting examples for anions are OH⁻, CO₃²⁻, Br⁻ or Cl⁻. Within a linker unit L, a cationic group may form the end that binds to MA.

The term *bifunctional aromatic moiety* or BA in the context of the present specification relates to a moiety that comprises 2 to 5, particularly 2 to 3, cyclic hydrocarbon moieties. Non-limiting examples are biphenyl, terphenyl (particularly para- or meta-terphenyl), 1,1'-methylenedibenzene, (1-methyl-1-phenyl-ethyl)benzene, 2-phenylethylbenzene, 9,9-dimethylfluorene and 9,9-dibutylfluorene. At least one, particularly all, of the cyclic hydrocarbon moieties are aromatic.

### Detailed Description of the Invention

The aim of the present invention is to provide anion exchange membranes with improved properties. In order to maintain high conductivity and alkaline stability while obtaining low water uptake, low swelling, and high mechanical properties, aryl-ether-free polyaromatic polymers with branched structures were designed.

A first aspect of the present invention relates to a polyaromatic polymer comprising
- at least one multifunctional aromatic moiety MA that comprises, particularly consists of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- cationic groups CG that are independently selected from a moiety of formula 1 or 4, 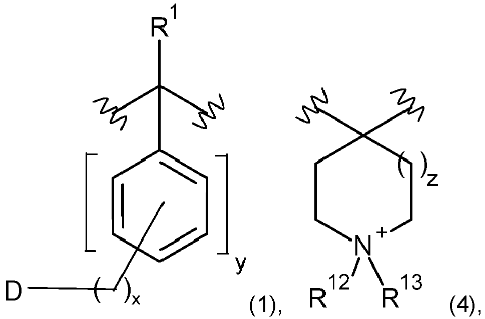
wherein
R¹ is a fully or partly fluorinated C₁₋₆-alkyl, particularly a fully or partly fluorinated C₁₋₄-alkyl, more particularly -CF₃,
R¹² and R¹³ are independently of each other selected from H, C₁₋₁₂-alkyl, phenyl and C₃₋₁₀-cycloalkyl, particularly H, C₁₋₁₂-alkyl, and phenyl, or
R¹² and R¹³ are connected to each other to form a cycloalkyl comprising 4 to 10 C atoms,
D is selected from -N⁺(R²)₃, -P⁺(R²)₄ or a cation of piperidyl, pyrrolidinyl, imidazolyl, pyrazolyl, imidazolidinyl, particularly from -N⁺(R²)₃, -P⁺(R²)₄ or a cation of imidazolyl, pyrazolyl, imidazolidinyl, more particularly -N⁺(R²)₃ or a cation of imidazolyl, wherein the cation of piperidyl, pyrrolidinyl, imidazolyl, pyrazolyl or imidazolidinyl is unsubstituted or substituted by one or more substituents independently selected from C₁₋₁₂-alkyl, phenyl,
   each R² is independently of any other R² selected from H, C₁₋₁₂-alkyl, phenyl, particularly H, C₁₋₆-alkyl, phenyl,
y is 0 or 1,
x is an integer between 0 and 12, particularly 0 and 8, more particularly 6 and 8, z is 0 or 1, particularly 1,

- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
   wherein
- one or more CG and one or more BA form a linear unit L, and
- MA is connected to 3 to 6, particularly 3 to 4, more particularly 3, linear units L.

Under standard ambient temperature and pressure conditions, the polyaromatic polymer is solid, particularly in form of a powder. The polymer powder may be used for preparing an anion exchange membrane. After dissolution in a suitable solvent such as dimethyl sulfoxide, the polyaromatic polymer may be casted onto a glass plate. The AEM can be peeled off from the glass plate in contact with water and used in an electrochemical device.

An AEM made from a polyaromatic polymer as described herein is characterized by low water uptake and low swelling. Particularly the aromatic moieties of MA and BA contribute to the low uptake of water and thus low swelling.

Furthermore, an AEM made from a polyaromatic polymer as described herein shows good mechanical properties. Particularly the branched structure and a high molecular weight contributes to a high polymer strength and toughness.

The cationic groups within the polymer allow for the transport of anions between an anode and a cathode in an electrochemical device. Non-limiting examples for anions are OH⁻, CO₃²⁻, Br⁻ or Cl⁻.

The polyaromatic polymer is a branched polymer. It comprises at least one multifunctional aromatic moiety MA, cationic groups CG and bifunctional aromatic moieties BA, wherein CG and BA form linear units L. The multifunctional moiety MA constitutes a branching point in the polymer. The branched structure is formed by the moieties MA, CG and BA. The polyaromatic polymer may be short-chain branched, long-chain branched or hyper-branched, particularly long-chain branched.

Particularly long chain branches can increase polymer strength, toughness, and the glassy transition temperature (Tg) due to an increase in the number of entanglements per chain. AEMs produced from such polymers show high conductivity, low water uptake and dimensional swelling, facile casting, and good mechanical properties.

The polyaromatic polymer is particularly aryl-ether-free, i.e. aromatic moieties are not connected via -O-.

In certain embodiments, the polyaromatic polymer does not comprise an aryl-ether.

In certain embodiments, the cyclic hydrocarbon moieties of MA and BA are not connected via -O-.

The linear units L and the multifunctional moieties MA form main and side chains within the polymer structure. Typically, several moieties MA are present in the polymer. Depending on the number of possible binding sites of MA (trifunctional, tetrafunctional, pentafunctional or hexafunctional), 3, 4, 5 or 6 linear moieties L may be bound to 1 moiety MA. To form the polymer, both ends of a linear unit L may be each connected to a respective moiety MA, or one end of the linear unit is bound to a moiety MA and the other end remains free. Such free end of a chain of the polymer comprises a terminal unit E. Based on the polymerization mechanism, it is expected that a chain ends with a linear unit L. Thus, the vast majority of terminal units E is bound to L. However, it may also occur - to a lesser extent - that a chain ends with a multifunctional moiety MA. In the latter case, a terminal unit E may bind to the free binding site of MA. The chemical structure of the terminal unit E depends on the quenching conditions that are applied during the preparation of the polyaromatic polymer. The polymerization reaction is quenched by adding a solvent to the reaction mixture. Suitable solvents are known to those of skill in the art. For instance, water or methanol may be used in the quenching step. If water is used, the moiety E is -OH. If methanol is used, the moiety E is -OCH₃.

In certain embodiments, the terminal unit E is selected from -OH, -O-C₁₋₄-alkyl, phenyl-OH and phenyl-O-C₁₋₄-alkyl.

In certain embodiments, the terminal unit E is selected from -OH, -OCH₃, -OCH₂CH₃,

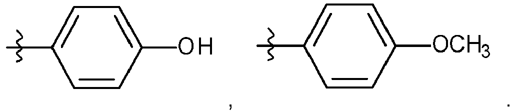

The moieties BA and CG alternate within a linear unit L. In particular, the moieties BA and CG are arranged in such a way, that a linear unit starts and ends with a moiety CG, i.e. the bond between a linear unit L and a multifunctional moiety MA or the bond between a linear unit L and a terminal unit E is formed by CG.

In certain embodiments, BA and CG alternate within the linear unit L.

In certain embodiments, the linear unit L comprises
- n bifunctional aromatic moieties BA and n+1 cationic groups CG, or
- n bifunctional aromatic moieties BA and n cationic groups CG,
wherein n is an integer between 1 and 300, particularly between 50 and 200.

In certain embodiments, the linear unit L comprises n bifunctional aromatic moieties BA and n+1 cationic groups CG, wherein n is an integer between 1 and 300, particularly between 50 and 200.

Between two moieties MA, the linear unit L should have cationic groups at both ends.

In certain embodiments, L comprises n bifunctional aromatic moieties BA and n+1 cationic groups CG in case of L binding to two multifunctional units MA.

In certain embodiments, each MA is connected to 3 to 6, particularly 3 to 4, more particularly 3, linear units L, wherein MA and L are connected in such a way that MA is bound to a cationic group CG.

In certain embodiments, the linear unit L binds either to two different multifunctional units MA or the linear unit L binds to one multifunctional unit MA and to one terminal unit E.

In certain embodiments, a terminal unit E binds to CG.

The polyaromatic polymer may comprise counterions. The negative charge of a counterion balances the positive charge of a cationic group CG. The polymer may be used to prepare an AEM for an electrochemical device. The cationic groups within the polymer allow for the transport of anions between an anode and a cathode in an electrochemical device.

In certain embodiments, the polyaromatic polymer comprises one or more counterions.

In certain embodiments, the polyaromatic polymer comprises one or more counterions selected from OH⁻, Cl⁻, Br⁻, I⁻, CO₃²⁻, HCO₃⁻, TFA⁻ (CF₃CO₂), BF₄⁻, PF₆⁻, TFSA⁻ (CF₃SO₃⁻).

In certain embodiments, the polyaromatic polymer comprises one or more counterions selected from OH⁻, CO₃²⁻, Br⁻ or Cl⁻.

In certain embodiments, the polyaromatic polymer comprises one or more counterions selected from OH⁻ and Cl⁻.

In certain embodiments, the cyclic hydrocarbon moieties of the moiety MA are connected to each other by a single bond, by sharing one or more covalent bonds (fused rings), by sharing a single atom (spirocyclic) and/or by an alkyl, particularly a C₁₋₆-alkyl, more particularly C₁₋₂-alkyl.

In certain embodiments, the cyclic hydrocarbon moieties of the moiety MA are connected to each other by a single bond, by sharing one or more covalent bonds (fused rings), and/or by sharing a single atom (spirocyclic).

In certain embodiments, the multifunctional moiety MA is independently selected from 1,3,5-triphenylbenzene, naphthalene, biphenylene, 1H-phenalene, anthracene, phenanthrene, 1,6-dihydropyrene, 10b,10c-dihydropyrene, pyrene, 9,9'-spirobi[fluorene].

The polymer may comprise only one type of MA, for example only 1,3,5-triphenylbenzene, or different types of MA, for example a mixture of 1,3,5-triphenylbenzene and naphthalene. In particular, only one type of MA is present in the polymer.

In certain embodiments, the multifunctional moiety MA is independently selected from 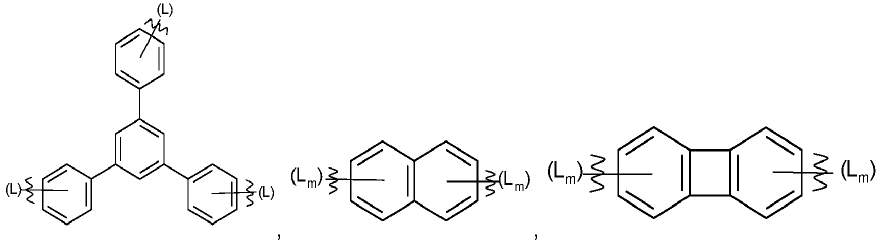 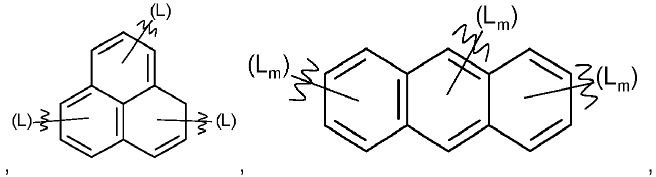 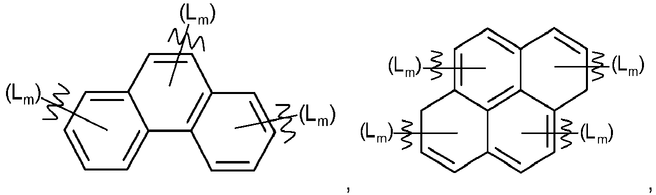 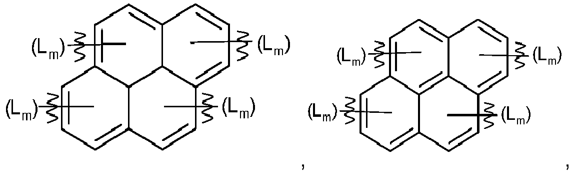 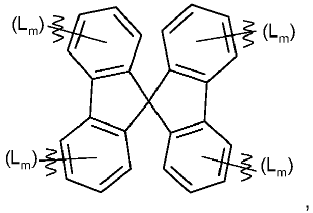 wherein
(L) or (Lₘ) indicates a bond to the linear unit L,
each m is independently selected from 0, 1 and 2, and the sum of all m is 3, 4, 5 or 6, particularly 3 or 4, more particularly 3.

In certain embodiments, the multifunctional moiety MA is independently selected from

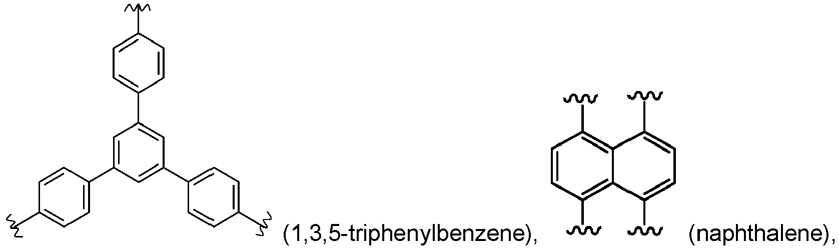

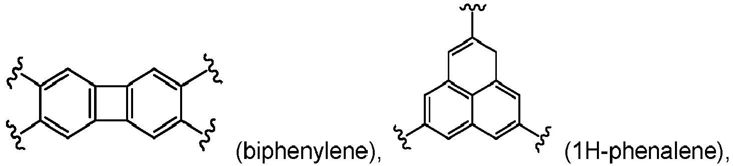

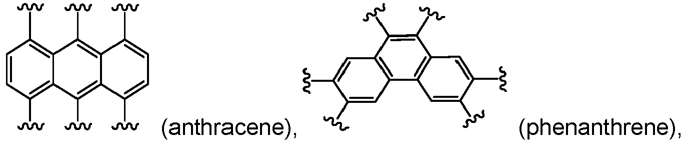

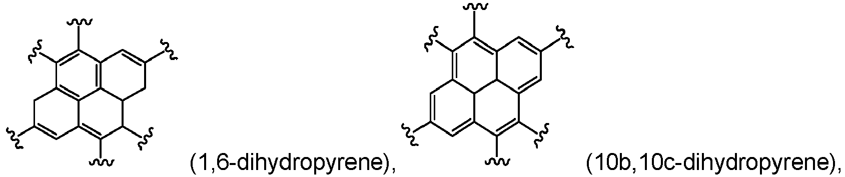

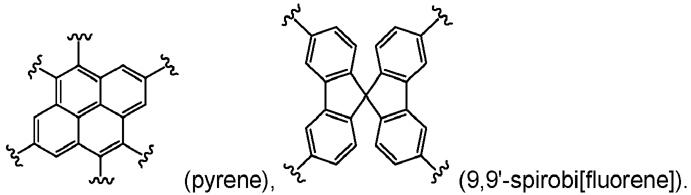

The structures shown above indicate preferred positions for the reaction between an active C-H of a benzene ring and a ketone to form a bond between MA and a precursor of CG. Depending on the C-H activity and steric hindrance, it might occur that not all indicated positions of a moiety MA bind to a moiety CG but only some. For instance, 6 binding positions are indicated for 1,6-dihydropyrene. This does not necessarily mean that each 1,6-dihydropyrene in a polymer is a hexafunctional branching point. 1,6-dihydropyrene could also be present in a polymer for instance as trifunctional moiety.

In certain embodiments, the cyclic hydrocarbon moieties of the moiety BA are connected to each other by a single bond, by a C₁₋₆-alkyl, sharing a single atom (spirocyclic), and/or by sharing one or more covalent bonds (fused rings).

In certain embodiments, the cyclic hydrocarbon moieties of the moiety BA are connected to each other by a single bond, by an alkyl, particularly a C₁₋₆-alkyl, more particularly C₁₋₂-alkyl, and/or by sharing one or more covalent bonds (fused rings).

In certain embodiments, the cyclic hydrocarbon moieties of the moiety BA are connected to each other by a single bond, by an alkyl, particularly C₁₋₆-alkyl, more particularly C₁₋₂-alkyl or by sharing one or more covalent bonds (fused rings).

In certain embodiments, the cyclic hydrocarbon moieties of BA are
- directly bound to each other, particularly by a single bond or fused rings, or
- connected by a C₁₋₆-alkyl, or
- directly bound to each other and additionally connected by a C₁₋₆-alkyl.

In certain embodiments, each bifunctional aromatic moiety BA is independently selected from a moiety of formula 2 or 3, 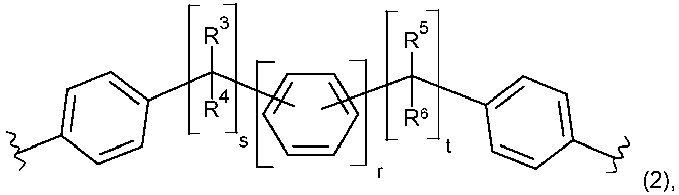 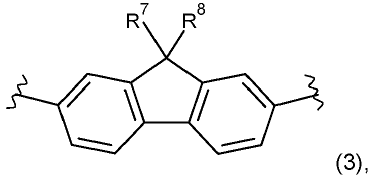 wherein
R³, R⁴, R⁵ and R⁶ are independently of each other selected from H, F, C₁₋₆-alkyl, partly or fully fluorinated C₁₋₆-alkyl,
R⁷ and R⁸ are independently of each other selected from H, F, C₁₋₆-alkyl, partly or fully fluorinated C₁₋₆-alkyl,
s and t are independently of each other an integer between 0 and 4, particularly between 0 and 2,
r is an integer between 0 and 3, particularly 0 and 2, more particularly 0 and 1.

In certain embodiments, R³, R⁴, R⁵, R⁶, R⁷ and R⁸ are independently of each other selected from H and C₁₋₆-alkyl.

The polymer may comprise only one type of BA, for example only biphenyl, or different types of BA, for example a mixture of biphenyl and para-terphenyl. In particular, only one type of BA is present in the polymer.

In certain embodiments, each bifunctional aromatic moiety BA is independently selected from a moiety of formula 2a, 2b or 3, 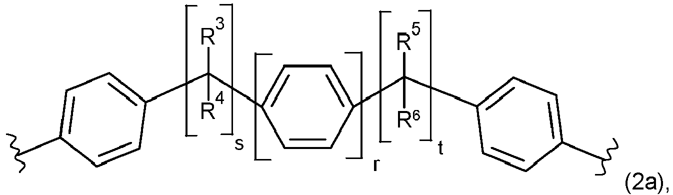 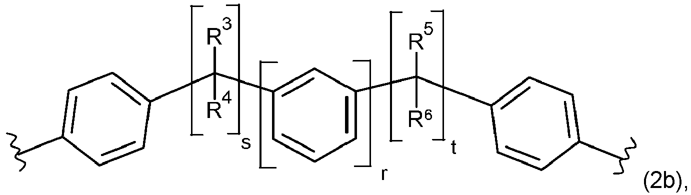 wherein the moiety of formula 3, R³, R⁴, R⁵, R⁶, s, r and t are defined as above.

In certain embodiments, each bifunctional aromatic moiety BA is independently selected from

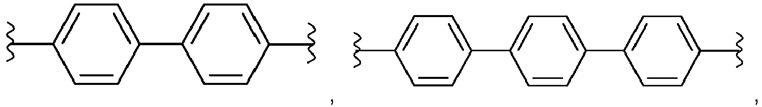

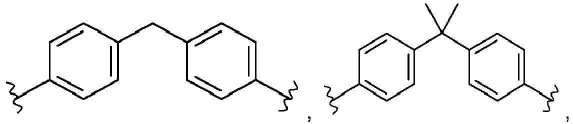

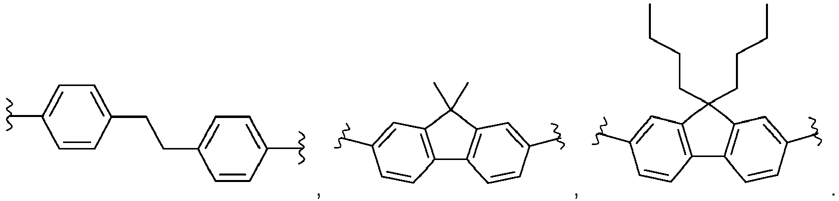

In certain embodiments, the cationic group CG is selected from a moiety of formula 1a, 1b, 1c, 1d, and 4, particularly of formula 1a, 1c and 4, 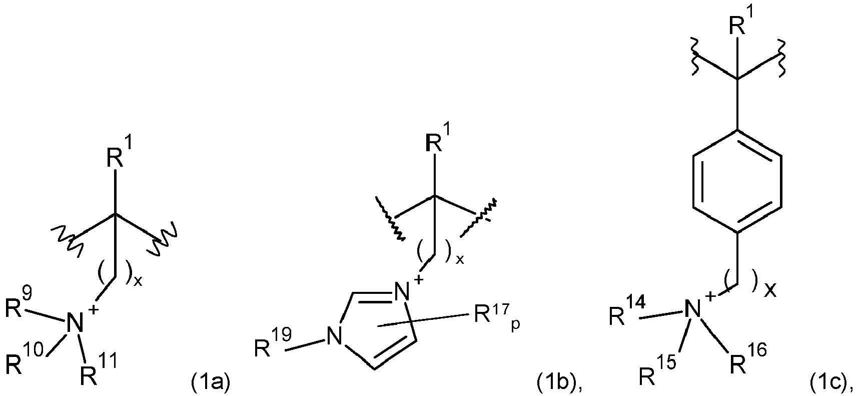 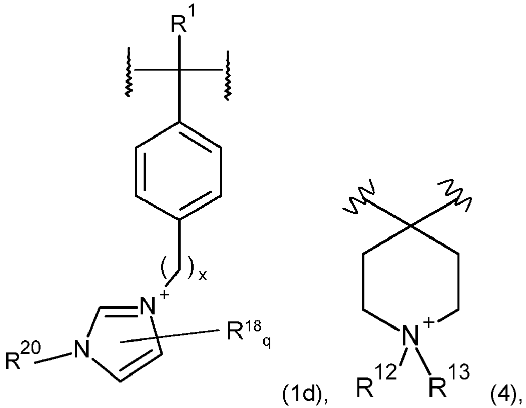 wherein
R¹ is a fully or partly fluorinated C₁₋₆-alkyl, particularly a fully fluorinated C₁₋₆-alkyl, more particularly a fully fluorinated C₁₋₃-alkyl, even more particularly -CF₃,
R⁹, R¹⁰, R¹¹, R¹⁴, R¹⁵ and R¹⁶ are independently of each other selected from H, C₁₋₆-alkyl, phenyl,
R¹² and R¹³ are independently of each other selected from H, C₁₋₆-alkyl, phenyl, C₃₋₁₀-cycloalkyl, or
R¹² and R¹³ are connected to each other to form a cycloalkyl comprising 4 to 10 C atoms,
R¹⁷ and R¹⁸ are independently selected from C₁₋₆-alkyl, particularly C₁₋₃-alkyl,
p and q are an integer between 0 and 3, particularly 0,
R¹⁹ and R²⁰ are independently selected from H and C₁₋₆-alkyl, particularly from H and C₁₋₃-alkyl,
x is an integer between 0 and 12, particularly between 0 and 8, more particularly between 6 and 8.

In certain embodiments, R¹² and R¹³ are independently of each other selected from H, C₁₋₆-alkyl, phenyl, or R¹² and R¹³ are connected to each other to form a cycloalkyl comprising 4 to 10 C atoms.

In certain embodiments, R¹² and R¹³ are independently of each other selected from H, C₁₋₆-alkyl, particularly from H and C₁₋₃-alkyl, even more particularly CH₃.

In certain embodiments, R¹² and R¹³ are independently of each other selected from a C₁₋₆-alkyl, particularly from a C₁₋₃-alkyl, even more particularly CH₃.

In certain embodiments, the cationic group CG is of formula 4 as defined above, particularly 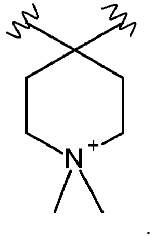 A second aspect of the invention relates to a precursor comprising
- at least one multifunctional aromatic moiety MA that comprises, particularly consists of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- neutral groups NG that are independently selected from a moiety of formula 1' or 4', 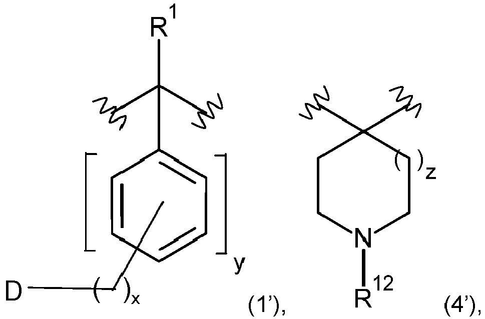
wherein
R¹ is a fully or partly fluorinated C₁₋₆-alkyl, particularly a fully or partly fluorinated C₁₋₄-alkyl, more particularly -CF₃,
R¹² is selected from H, C₁₋₁₂-alkyl, phenyl, C₃₋₁₀-cycloalkyl,
D is a leaving group, particularly a leaving group selected from -I, -Br, -Cl
and -OH,
y is 0 or 1,
x is an integer between 0 and 12, particularly 0 and 8, more particularly 6 and 8,
z is 0 or 1, particularly 1,

- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
wherein
- one or more CG and one or more BA form a linear unit L, and
- MA is connected to 3 to 6, particularly 3 to 4, more particularly 3, linear units L.

Polymers described in the first aspect of the invention are synthesized by using multifunctional aromatic moieties MA, bifunctional aromatic moieties BA and neutral groups NG. After formation of the polymer precursor, the neutral group is transformed into a cationic group CG.

The general structure of the precursor is basically the same as the general structure of the polymer described in the first aspect of the invention. The only difference is that the cationic group CG is replaced by a neutral group NG. That means, that the moieties BA and NG alternate within a linear unit and MA is a branching point that is bound to at least 3 linear units.

In certain embodiments, the precursor comprises
- at least one multifunctional aromatic moiety MA that comprises, particularly consists of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- neutral groups NG that are independently selected from a moiety of formula 1' or 4', 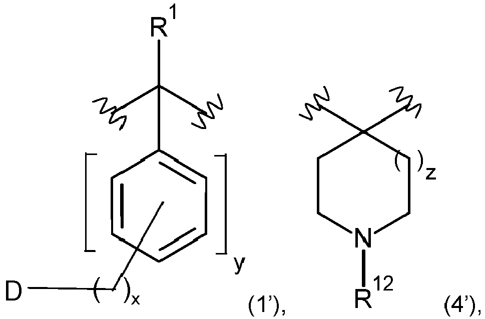
wherein
R¹ is a fully or partly fluorinated C₁₋₆-alkyl, particularly a fully or partly fluorinated C₁₋₄-alkyl, more particularly -CF₃,
R¹² is selected from H, C₁₋₁₂-alkyl, phenyl, C₃₋₁₀-cycloalkyl,
D is a leaving group, particularly a leaving group selected from -I, -Br, -Cl and -OH,
y is 0 or 1,
x is an integer between 0 and 12, particularly 0 and 8, more particularly 6 and 8,
z is 0 or 1, particularly 1

- bifunctional aromatic moieties BA that are independently selected from a moiety that comprises 2 to 5, particularly 2 to 3, cyclic hydrocarbon moieties that are
   directly bound to each other, or
   connected by a C₁₋₆-alkyl, or
   directly bound to each other and additionally connected by a C₁₋₆-alkyl,
   wherein BA may be unsubstituted or substituted by one or more substituents independently selected from C₁₋₁₀-alkyl, -O-C₁₋₁₀-alkyl, a fully or partly fluorinated C₁₋₁₀-alkyl,
- terminal units E that are independently selected from -OH, -O-C₁₋₄-alkyl, phenyl-OH and phenyl-O-C₁₋₄-alkyl, particularly selected from

   -OH -OCH₃ -OCH₂CH₃

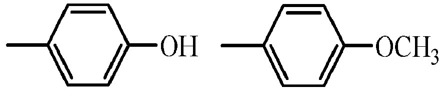

   wherein
- CG and BA form a linear unit L comprising
   ∘ n bifunctional aromatic moieties BA and n+1 cationic groups CG, or
   ∘ n bifunctional aromatic moieties BA and n cationic groups CG,
   wherein CG and BA alternate within the linear unit L and wherein n is an integer between 1 and 100, particularly between 10 and 50,
- each MA is connected to 3 to 6, particularly 3 to 4, more particularly 3, linear units L, wherein MA and L are connected in such a way that MA is bound to a cationic group CG,
- the linear unit L is either bound to two multifunctional units MA or bound to one multifunctional unit MA and one terminal unit E.

In certain embodiments, the neutral group NG is independently selected from a moiety of formula 1", 1"' or 4", 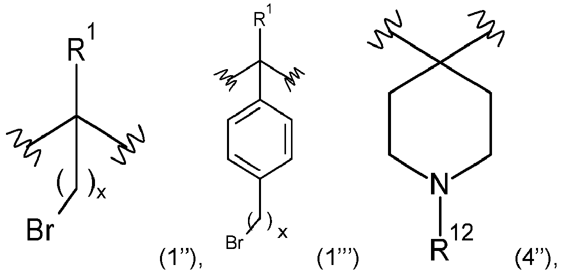 wherein
R¹ is a fully or partly fluorinated C₁₋₆-alkyl,particularly a fully or partly fluorinated C₁₋₄-alkyl, more particularly -CF₃,
R¹² is selected from H, C₁₋₆-alkyl, phenyl, C₃₋₁₀-cycloalkyl, particularly C₁₋₄-alkyl,
x is an integer between 0 and 12, particularly 0 and 8, more particularly 6 and 8.

In certain embodiments, R¹² is a H, C₁₋₄-alkyl, particularly -CH₃.

In certain embodiments, R¹² is H.

A precursor that comprises a neutral group according for formula 4' is particularly used to obtain a polymer with a cationic group that is characterized by R¹² and R¹³ being connected to each other to form a cycloalkyl comprising 4 to 10 C atoms. To achieve such a ring, R¹² of the neutral group according to formula 4' is H. Depending on the pH, the neutral group may be protonated. A ring is formed upon reaction with an alkyl dibromide (see Scheme 1).

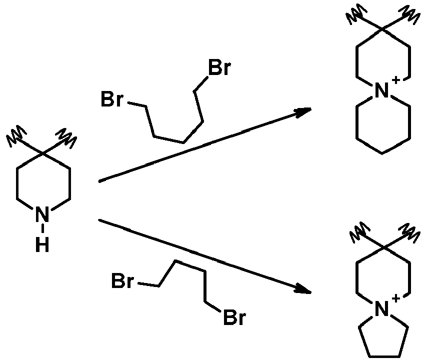

Scheme 1: The neutral group was obtained by using 4-piperidone as ketone to obtain a precursor. The precursor is subsequently reacted with an alkyl dibromide to form a cationic group that comprises an additional 6- (upper reaction path) or 5-membered (lower reaction path) heterocycle (see also J. Mater. Chem. A,2018, 6, 16537).

Reference is made to the embodiments of the first aspect of the invention, particularly with regard to the definitions of MA and BA and the arrangement of branching points and polymer chains.

A third aspect of the invention relates to a precursor obtained by a reaction of a reaction mixture comprising
- at least one multifunctional aromatic moiety MA that comprises, particularly consist of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- a ketone independently selected from a moiety of formula 1k or 4k, 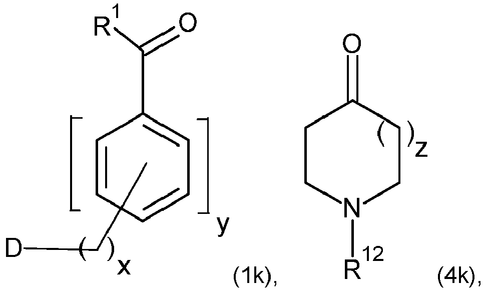
wherein
R¹ is a fully or partly fluorinated C₁₋₆-alkyl, particularly a fully or partly fluorinated C₁₋₄-alkyl, more particularly -CF₃,
D is a leaving group, particularly a leaving group selected from -I, -Br, -Cl and -OH,
y is 0 or 1,
x is an integer between 0 and 12, particularly 0 and 8, more particularly 6 and 8, z is 0 or 1, particularly 1,

- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl
wherein the reaction mixture has a pH < 1.

The polymerization reaction is catalyzed by a strong acid so the reaction is under acidic condition, particularly at pH < 1. During the polymerization, an active C-H moiety of a cyclic moiety, particularly a benzene ring, of BA or MA reacts with the ketone moiety of the ketone according to formula 1k or 4k. Subsequently, the precursor is purified. After the polymerization and purification process, a neutral precursor is obtained.

The specific formulas for MA and BA shown in the first aspect of the invention indicate bonds to an adjacent moiety. In the first aspect of the invention, MA and BA are referred to as monomers within a polymer. In the context of the third aspect, the moieties MA and BA are used as educts and the bonds do not indicate a bond to an adjacent moiety but a bond to an H atom. During the polymerization reaction, a bond between two adjacent moieties is formed at this position.

For example, a moiety BA of formula 3 according to the first aspect of the invention is bound to two adjacent moieties such as two cationic groups CG. In the context of the third aspect, it is bound to two H atoms. Similar considerations apply to the other formulas that relate to BA and MA. 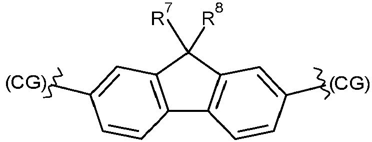 (first aspect), 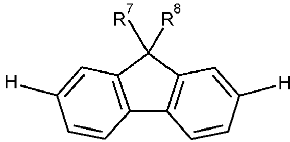 (third aspect).

The polymerization reaction may be quenched by adding a solvent to the reaction mixture or by pouring the reaction mixture into a solvent. Suitable solvents are known to those of skill in the art. For instance, water or methanol may be used in the quenching step.

In certain embodiments, the reaction according to the third aspect of the invention is followed by a quenching step.

In certain embodiments, an alcohol, particularly methanol, or water is used in the quenching step.

In certain embodiments, the reaction according to the third aspect of the invention is followed by a purification step.

In certain embodiments, an alkaline solution, particularly KOH, more particularly 1M KOH, or water is used in the purification step.

In certain embodiments, water is used in the purification step.

In certain embodiments, an alkaline solution, particularly KOH, more particularly 1M KOH, is used in the purification step.

In certain embodiments, the purification step is performed repeatedly.

In certain embodiments, the purification step is performed after the quenching step.

The branching degree of the precursor/polyaromatic polymer is adjusted by choosing suitable molar ratios between BA, the ketone and MA.

In certain embodiments,
- the ratio of the sum of the molar amounts of BA and MA to the molar amount of the ketone is between 0.8 and 1.2, particularly 1:1, and/or
- the ratio of the molar amount of BA to the molar amount of the ketone is between 50:100 and 100:100, particularly between 95:100 and 99.5:100, and/or
- the ratio of the molar amount of MA to the sum of the molar amounts of the ketone and BA is between 0.1:100 and 50:100, particularly between 0.5:100 and 5:100, more particularly 1:100.

In certain embodiments, the ratio of the sum of the molar amounts of BA and MA to the molar amount of the ketone is between 0.8 and 1.2.

In certain embodiments, the ratio of the sum of the molar amounts of BA and MA to the molar amount of the ketone is about 1:1.

In certain embodiments, the ratio of the sum of the molar amounts of BA and MA to the molar amount of the ketone is 1:1.

In certain embodiments, the ratio of the molar amount of BA to the molar amount of the ketone is between 50:100 and 100:100, particularly between 95:100 and 99.5:100.

In certain embodiments, the ratio of the molar amount of BA to the molar amount of the ketone is between 95:100 and 99:100.

In certain embodiments, the ratio of the molar amount of MA to the sum of the molar amounts of the ketone and BA is between 0.1:100 and 50:100, particularly between 0.5:100 and 5:100, more particularly 1:100.

The polymerization reaction is performed in a suitable solvent. Suitable solvents are known to a skilled person.

In certain embodiments, the reaction is performed in a suitable solvent.

In certain embodiments, the reaction is performed in dichloromethane, ethylene dichloride or benzene, particularly dichloromethane.

MA, BA and the ketone may be first dissolved in the solvent described above and then the reaction is started by lowering the pH to pH < 1.

In certain embodiments, MA, BA and the ketone are provided in a suitable solvent, particularly in dichloromethane, ethylene dichloride or benzene, more particularly dichloromethane.

In certain embodiments, the pH is adjusted to < 1 by using TFA and/or TFSA.

The amount of TFA or TFSA needed depends on the temperature and reaction time. The pH is adjusted by standard methods known to a skilled person. For instance, the pH may be measured and TFA or TFSA is added until the desired pH is reached.

Reference is made to the embodiments of the first and second aspect of the invention, particularly with regard to the definitions of MA and BA and the arrangement of branching points and polymer chains. As described above, bonds of MA or BA, that indicate a bond to an adjacent moiety in the context of the first aspect of the invention (MA and BA are part of a polymer), indicate in the context of the third aspect of the invention a bond to a H atom (MA and BA are educts for forming said polymer).

A fourth aspect of the invention relates to a polyaromatic polymer obtained by a reaction of a reaction mixture comprising
- the precursor according to the second or third aspect of the invention, and
- a reactant selected from
   ∘ a halogenated C₁₋₁₂-alkyl, a halogenated phenyl, or a halogenated C₃₋₁₀-cycloalkyl, or
   ∘ N(R²)₃, P(R²)₃, with R² being defined as above, or
   ∘ piperidyl, pyrrolidinyl, imidazolyl, pyrazolyl or imidazolidinyl.

For use in an AEM, the polymer has to be ionic to allow for the transport of anions. Thus, the neutral precursor is reacted with a suitable reactant such as an amine or CH₃I to obtain an ionic polymer. The reaction is very simple as it requires just mixing the neutral precursor polymer and the reactant in a suitable solvent such as dimethyl sulfoxide over 24h.

A halogenated C₁₋₁₂-alkyl, a halogenated phenyl, or a halogenated C₃₋₁₀-cycloalkyl may be used in case of NG being a moiety of formula 4', i.e. a ketone of formula 4k has been used to prepare the neutral precursor. In this case, a polymer that comprises a cationic group CG according to formula 4 is obtained. As described above, an alkyl that comprises two halogens, particularly bromide, may be used to obtain a cationic group that is characterized by R¹² and R¹³ being connected to form a cycloalkyl (see Scheme 1).

N(R²)₃ or P(R²)₃ may be used in case of NG being a moiety of formula 1', i.e. a ketone of formula 1k has been used to prepare the neutral precursor. In this case, a polymer that comprises a cationic group CG according to formula 1, particularly according to formula 1a or 1c, is obtained.

Piperidyl, pyrrolidinyl, imidazolyl, pyrazolyl or imidazolidinyl may be used in case of NG being a moiety of formula 1', i.e. a ketone of formula 1k has been used to prepare the neutral precursor. In this case, a polymer that comprises a cationic group CG according to formula 1, particularly according to formula 1b or 1d, is obtained.

In relation to the neutral group or the ketone, the reactant is used in excess to obtain a high yield of the cationic polyaromatic polymer.

In certain embodiments, the ratio of the molar amount of the reactant to the molar amount of the neutral group NG or to the molar amount of the ketone is 1:1 to 3:1, particularly 1.5:1 to 3:1, more particularly 3:1.

To further increase the yield, a base may be added to the reaction mixture. In relation to the neutral group or the ketone, the base is used in excess to further increase the yield of the cationic polyaromatic polymer.

In certain embodiments, a base selected from KOH, K₂CO₃, Na₂CO₃, NaHCO₃, KHCO₃, CaCO₃ and CaHCO₃ is added to the reaction mixture.

In certain embodiments, the ratio of the molar amount of the base to the molar amount of the neutral group or the ketone is 1.5:1 to 3:1, particularly 2:1.

The reaction described above is performed in a suitable solvent.

In certain embodiments, the precursor according to the second or third aspect of the invention and the reactant are dissolved in dimethyl sulfoxide, DMSO, DMF, NMP, THF, toluene, ethyl acetate, acetone.

Reference is made to the embodiments of the first, second and third aspect of the invention, particularly with regard to the definitions of MA and BA and the arrangement of branching points and polymer chains.

A fifth aspect of the invention relates to an anion exchange membrane comprising a polyaromatic polymer according to the first or fourth aspect of the invention and a suitable counterion.

An anion exchange membrane according to the invention shows high durability because it is ether-free. It also shows lower water uptake and swelling and improved mechanical properties because of its branched structure. The aryl-ether-free polyaromatics according to the invention are characterized by branched structures where pendent quaternary ammonium or piperidinium cations are attached to a polyaryl backbone free of aryl-ether moieties. Anion exchange membranes prepared from these polymers show high hydroxide conductivity, low water uptake and dimensional swelling, good mechanical properties and excellent membrane casting property.

Particularly long chain branches can increase polymer strength, toughness, and the glassy transition temperature (Tg) due to an increase in the number of entanglements per chain. AEMs produced from such polymers show high conductivity, low water uptake and dimensional swelling, facile casting, and good mechanical properties. Particularly, the tensile strength of an AEM according to the invention is at least 10MPa and the elongating at break is at least 5%".

The cationic groups within the polymer allow for the transport of anions between an anode and a cathode in an electrochemical device. Non-limiting examples for anions are OH⁻, CO₃²⁻, Br⁻ or Cl⁻.

In certain embodiments, the counterion is selected from OH⁻, Cl⁻, Br⁻, I⁻, CO₃²⁻, HCO₃⁻, TFA⁻ (CF₃CO₂⁻), TFSA⁻ (CF₃SO₃⁻), BF₄⁻, PF₆⁻, more particularly OH⁻ and Cl⁻.

In certain embodiments, the anion exchange membrane is obtained by using a polyaromatic polymer according to the first or fourth aspect of the invention.

In certain embodiments, the anion exchange membrane is characterized by a water uptake of ≤100%, particularly ≤ 96 % at 40 °C, and/or a water uptake of ≤ 300%, particularly ≤ 110 % at 80 °C, wherein the water uptake is in relation to the dry mass of the anion exchange membrane with OH⁻ as counterion.

In certain embodiments, the anion exchange membrane is characterized by a water uptake between 1% and 100%, particularly between 65 % and 96 % at 40 °C, and/or a water uptake between 5% to 300%, particularly 75 % and 110 % at 80 °C, wherein the water uptake is in relation to the dry mass of the anion exchange membrane with OH⁻ as counterion.

In certain embodiments, the anion exchange membrane is characterized by a swelling ratio of ≤ 50%, particularly ≤ 35 % at 40 °C, and/or a swelling ratio ≤ 200%, particularly ≤ 35 % at 80 °C, wherein the swelling ratio is in relation to the dry mass of the anion exchange membrane with OH⁻ as counterion.

In certain embodiments, the anion exchange membrane is characterized by a swelling ratio between 1% and 50%, particularly between 20 % and 35 % at 40 °C, and/or a swelling ratio between 1% to 200%, particularly between 25 % and 35 % at 80 °C, wherein the swelling ratio is in relation to the dry mass of the anion exchange membrane with OH⁻ as counterion.

In certain embodiments, the anion exchange membrane is characterized by an ion exchange capacity between 1.5 mmol/g and 4 mmol/g, particularly 2.75 and 2.9 mmol/g.

In certain embodiments, the anion exchange membrane is characterized by an OH⁻ conductivity at 40 °C between 50 mS/cm and 120 mS/cm, particularly between 81 and 90 mS/cm, and/or the OH⁻ conductivity at 80 °C is between 80 mS/cm and 250 mS/cm, particularly between135 mS/cm and 150 mS/cm.

In certain embodiments, the polyaromatic polymer according to the first or fourth aspect of the invention, the precursor according to the second or third aspect of the invention, or the anion exchange membrane according to the fifth aspect of the invention is aryl-ether free.

Reference is made to the embodiments of the first, second, third and fourth aspect of the invention, particularly with regard to the definitions of MA and BA and the arrangement of branching points and polymer chains.

The invention is further illustrated by the following examples and figures, from which further embodiments and advantages can be drawn. These examples are meant to illustrate the invention but not to limit its scope.

### Description of the Figures

- Fig. 1: shows a section of a polymer (branched poly(terphenyl-triphenyl benzene-piperidine). The multifunctional aromatic moiety MA, the bifunctional moieties BA and the cationic groups CG are indicated.
- Fig. 2: shows the preparation method of aryl-ether-free polyaromatics with branched structures. The moiety Ar in the polymer corresponds to the moiety BA, the ketone in the structure corresponds to the neutral group NG, n indicates that the polymer comprises several multifunctional moieties MA.
- Fig. 3: shows possible bifunctional aromatic moieties BA.
- Fig. 4: shows possible multifunctional aromatic moieties MA.
- Fig. 5: shows possible ketones.
- Fig. 6: shows possible cationic groups CG. Wavy lines indicate bonds to adjacent moieties of the polymer.
- Fig. 7: shows the chemical structure of a branched poly(terphenyl-triphenyl benzene-piperidine).
- Fig. 8: shows ¹H spectra of (a) a branched poly(terphenyl-triphenyl benzene-piperidine) (protonated by TFA) and (b) a branched poly(terphenyl-triphenyl benzene-piperidinium).
- Fig. 9: shows stress-strain curve of PTP and b-PTP-x.
- Fig. 10: shows OH⁻ conductivity remaining of b-PTP-2.5 after treatment in 1M or 3M KOH at 80 °C.

### Examples

### Example 1: Polymer and membrane preparation

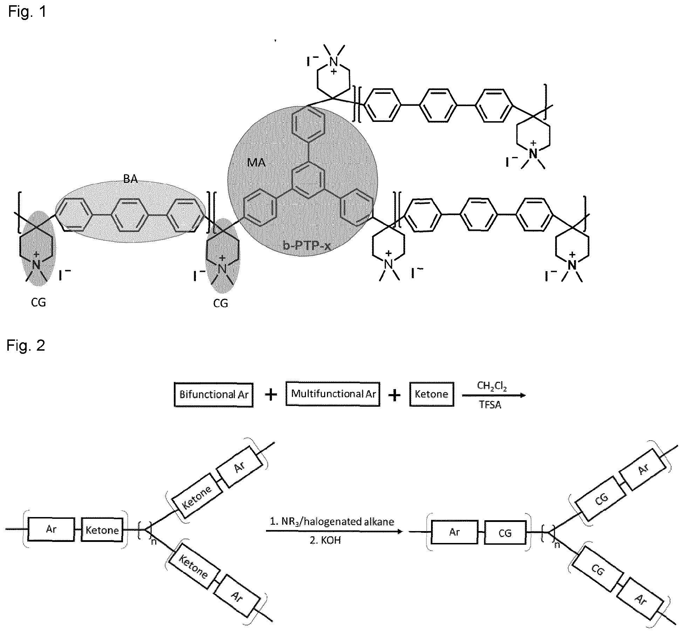

A series of aryl-ether-free polyaromatics with branch structures (see the example shown in Fig. 1) was prepared. The polyaromatics comprise multifunctional aromatic moieties MA, bifunctional aromatic moieties BA and cationic groups CG. The branching degree ranges from 3 to 20.

The preparation of aryl-ether-free polyaromatics with branch structures is shown in Fig. 2. A bifunctional aromatic, a multifunctional aromatic, and a ketone were dissolved in dichloromethane. Trifluoromethanesulfonic acid (TFSA) were added to form an ether-free polyaromatic precursor. The reaction of the polyaromatic precursor with trialkyl amine (NR₃) or a halogenated alkane gives a branching polyaromatic with cationic groups.

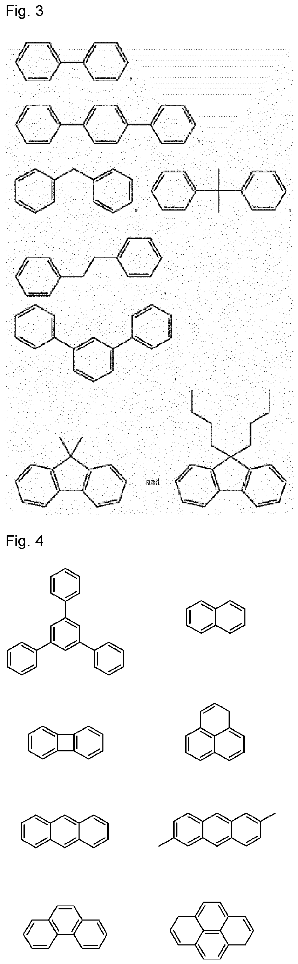

In Fig. 2, the bifunctional aromatic compound is selected from Fig. 3.

In Fig. 2, the multifunctional aromatic compound is selected from Fig. 4.

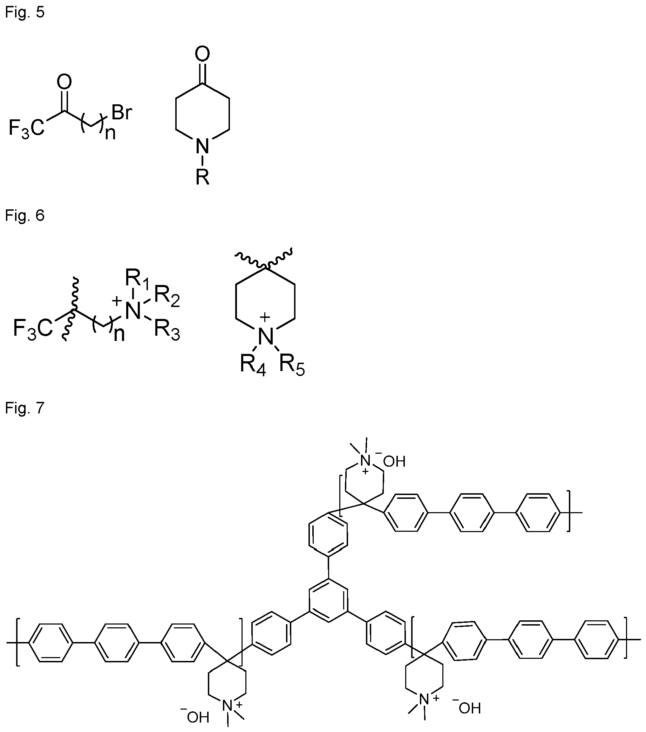

In Fig. 2, the ketone compound is selected from Fig. 5, where n is from 1 to 20, R is H or alkyl group.

After reacting with an amine or a halogenated alkane, the cationic groups (CG) of the aryl-ether-free polyaromatics are one of the groups listing in Fig. 6, where n is from 1 to 20, R1, R2, R3, R4 and R5 are alkyl groups.

One example of aryl-ether-free polyaromatics with branched structures is shown in Fig. 7.

### Polymer Preparation

p-terphenyl (1 equiv.), 1,3,5-triphenylbenzene, and 1-methyl-4-piperidone (1 equiv.) were dissolved into dichloromethane. Different equivalents for 1,3,5-triphenylbenzene were used as follows: Polymers that were obtained by using 0.01 equivalents 1,3,5-triphenylbenzene are noted as b-PTP-1. Polymers that were obtained by using 0.025 equivalents 1,3,5-triphenylbenzene are noted as b-PTP-2.5. Polymers that were obtained by using 0.05 equivalents 1,3,5-triphenylbenzene are noted as b-PTP-5. PTP relates to linear polymers without 1,3,5-triphenylbenzene.

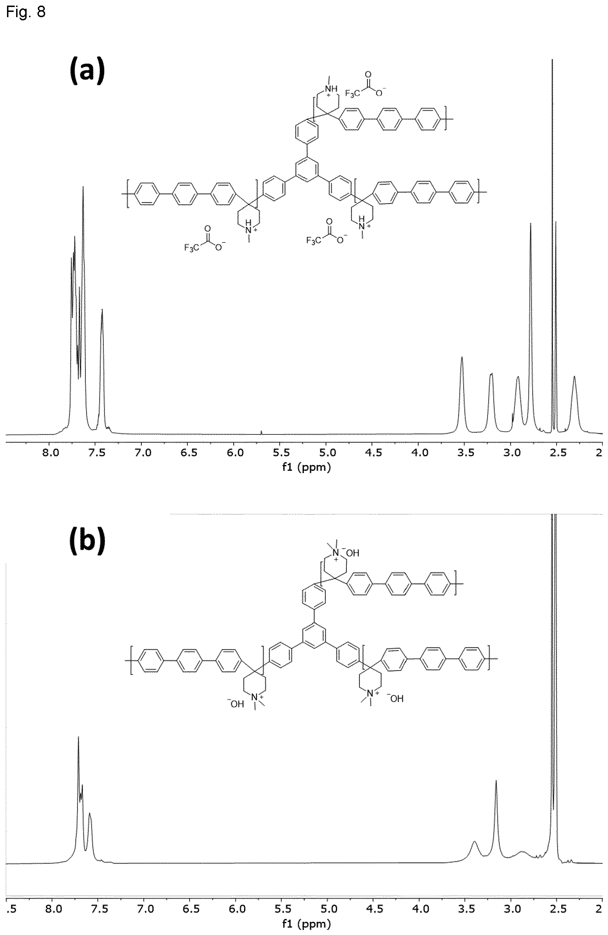

The solution was stirred at 0 °C. Trifluoroacetic acid (1.5 equiv.) and trifluoromethanesulfonic acid (10 equiv.) were added. After 6 hours, the solution became viscous and was stirred for another 1 hour. The resulting dark blue gel was slowly poured into excessive water, forming a white fiber. The fiber was further washed with a 1 M KOH solution and water for three times. A branched poly(terphenyl-triphenyl benzene-piperidine) (yield 92%) was obtained after drying under vacuum at 120 °C overnight. Fig. 8(a) shows ¹H spectra of a branched poly(terphenyl-triphenyl benzene-piperidine) (protonated by TFA). A branch poly(terphenyl-triphenyl benzene-piperidine) was suspended in dimethyl sulfoxide. CH₃I (3 equiv. to piperidone group) and K₂CO₃ (2 equiv. to piperidone group) were added. The solution was stirred at room temperature in a dark environment for 1day. The resulted viscous solution was precipitated from dichloromethane, washed with water twice, and completely dried at 80 °C under vacuum. The yield of the branch poly(terphenyl-triphenyl benzene-piperidinium) is around 100%. Fig. 8(b) shows ¹H spectra of branch poly(terphenyl-triphenyl benzene-piperidinium).

### Membrane preparation

The polymers were dissolved in dimethyl sulfoxide, filtered through a 0.45 um PTFE filter and casted onto a glass plate. AEMs (in iodide form) were peeled off from the glass plate in contact with deionized water. AEMs in chloride ion form were obtained by ion exchanging in 1 M KCI solution at 80 °C. AEMs in hydroxide form was obtained by ion exchanging in 1 M KOH solution at 80 °C. The AEMs is noted as b-PTP-x, where x is the percent of triphenyl benzene to p-terphenyl.

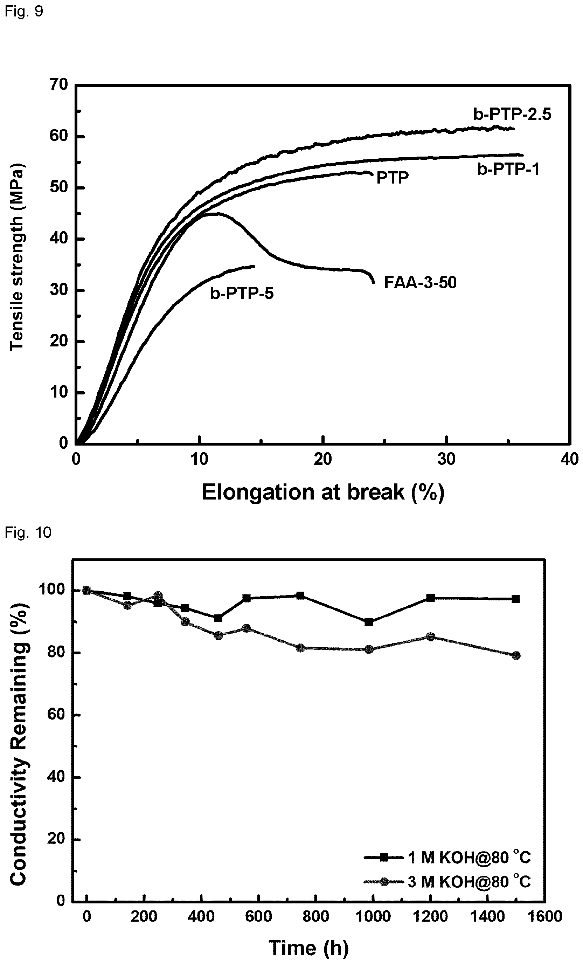

Fig. 9 showed the stress-strain curves of PTP and b-PTP-x at ambient conditions. As comparison, PTP is the AEM with a linear structure and has 48 MPa stress and 17% strain at break under 50% RH and room temperature. The b-PTP-2.5 exhibits 58 MPa stress and 14% strain at break, thanks to the branching structure.

Table 1 shows the ion exchange capacity (IEC), water uptake, swelling ratio and OH⁻ conductivity of PTP and b-PTP-x. b-PTP-2.5 showed high OH⁻ conductivity compared with other reported aromatic AEMs (e.g., quaternized poly(phenylene oxide)s, poly(arylene ether ketone)s and poly(arylene ether sulfone)s). The conductivity increases with temperature, due to the faster migration of ions and higher diffusivity with increasing temperature. b-PTP-2.5 has similar IEC and OH⁻ conductivity with PTP, while it has less water uptake and swelling ratio. These advantages may be beneficial for building membrane electrode assembly (MEA) in AEM fuel cells/water electrolyzers.

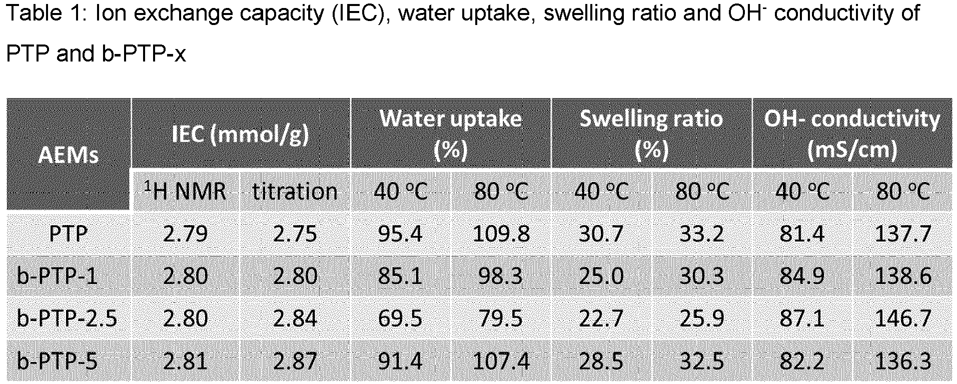

Fig. 10 showed the remaining OH- conductivity of b-PTP-2.5 after treatment in 1M or 3M KOH at 80 oC. b-PTP-2.5 showed nearly no loss of conductivity in 1M KOH at 80 °C over 1500h, which indicate that our AEMs has excellent ex-situ durability. The degradation of 20% conductivity can be observed in 3M KOH at 1500h.

### Example 2: Comparison to known polymers

The polymers according to the invention are characterized by a high molecular weight as measured by the intrinsic viscosity. A comparison to known polymers is shown in Table 2. The polymer according to the invention has higher intrinsic viscosity than others, indicating a higher molecular weight. Improved mechanical properties are associated with the high molecular weight.

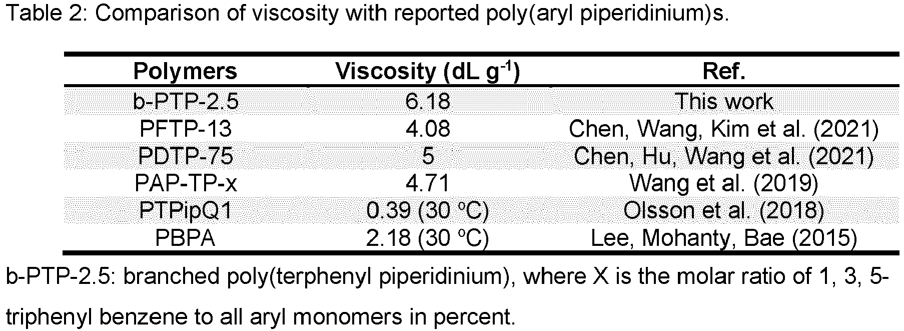

### References

Chen N, Wang H H, Kim S P, et al. Poly (fluorenyl aryl piperidinium) membranes and ionomers for anion exchange membrane fuel cells[J]. Nature communications, 2021, 12(1): 1-12.

Chen N, Hu C, Wang H H, et al. Poly (Alkyl-Terphenyl Piperidinium) Ionomers and Membranes with an Outstanding Alkaline - Membrane Fuel - Cell Performance of 2.58 W cm- 2[J]. Angewandte Chemie, 2021, 133(14): 7789-7797.

IUPAC recommendations 1997. "Source-based nomenclature for non-linear macromolecules and macromolecular assemblies". Pure & Appl. Chem. Vol. 69, No. 12, pp. 2511-2521, 1997

Lee, W. H.; Kim, Y. S.; Bae, C., Robust hydroxide ion conducting poly (biphenyl alkylene)s for alkaline fuel cell membranes. ACS Macro Letters 2015, 4 (8), 814-818.

Lee W H, Mohanty A D, Bae C. Fluorene-based hydroxide ion conducting polymers for chemically stable anion exchange membrane fuel cells[J]. ACS Macro Letters, 2015, 4(4): 453-457.

Olsson, J. S.; Pham, T. H.; Jannasch, P., Poly (arylene piperidinium) hydroxide ion exchange membranes: synthesis, alkaline stability, and conductivity. Advanced Functional Materials 2018, 28 (2), 1702758.

Thanh Huong Pham, Joel S. Olsson and Patric Jannasch. Poly(arylene alkylene)s with pendant N-spirocyclic quaternary ammonium cations for anion exchange membranes.

J. Mater. Chem. A, 2018, 6, 16537

Wang J, Zhao Y, Setzler B P, et al. Poly (aryl piperidinium) membranes and ionomers for hydroxide exchange membrane fuel cells[J]. Nature Energy, 2019, 4(5): 392-398.

Zhang F, Li T, Chen W, et al. Highly stable electron-withdrawing C=O link-free backbone with branched cationic side chain as anion exchange membrane[J]. Journal of Membrane Science, 2021, 624: 119052.

## Claims

1. A polyaromatic polymer comprising
- at least one multifunctional aromatic moiety MA that comprises, particularly consists of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- cationic groups CG that are independently selected from a moiety of formula 1 or 4, 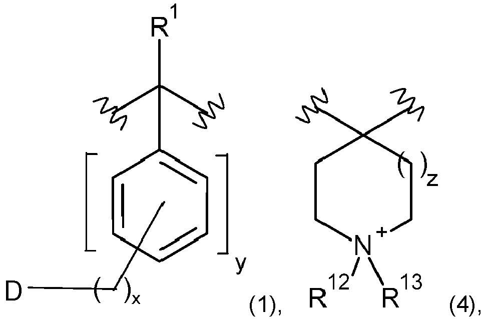
wherein
R¹ is a fully or partly fluorinated C₁₋₆-alkyl, particularly -CF₃,
R¹² and R¹³ are independently of each other selected from H, C₁₋₁₂-alkyl, phenyl, and C₃₋₁₀-cycloalkyl, or
R¹² and R¹³ are connected to each other to form a cycloalkyl comprising 4 to 10 C atoms,
D is selected from -N⁺(R²)₃, -P⁺(R²)₄ or a cation of piperidyl, pyrrolidinyl, imidazolyl, pyrazolyl, imidazolidinyl, particularly from -N⁺(R²)₃, -P⁺(R²)₄ or a cation of imidazolyl, pyrazolyl, imidazolidinyl, more particularly -N⁺(R²)₃ or a cation of imidazolyl, wherein the cation of piperidyl, pyrrolidinyl, imidazolyl, pyrazolyl or imidazolidinyl is unsubstituted or substituted by one or more substituents independently selected from C₁₋₁₂-alkyl, phenyl,
each R² is independently of any other R² selected from H, C₁₋₁₂-alkyl, phenyl, particularly H, C₁₋₆-alkyl, phenyl,
y is 0 or 1,
x is an integer between 0 and 12, particularly 0 and 8, more particularly 6 and 8,
z is 0 or 1, particularly 1,
- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
wherein
- one or more CG and one or more BA form a linear unit L, and
- MA is connected to 3 to 6, particularly 3 to 4, more particularly 3, linear units L.

2. The polyaromatic compound according to claim 1, wherein the cyclic hydrocarbon moieties of BA and MA are not connected by -O-, particularly the cyclic moieties of BA and MA are connected by
- a single bond,
- sharing one or more covalent bonds (fused rings),
- sharing a single atom (spirocyclic), and/or
- an alkyl.

3. The polyaromatic compound according to any of the preceding claims, wherein BA and CG alternate within the linear unit L.

4. The polyaromatic polymer according to any of the preceding claims, wherein the multifunctional moiety MA is independently selected from 1,3,5-triphenylbenzene, naphthalene, biphenylene, 1H-phenalene, anthracene, phenanthrene, 1,6-dihydropyrene, 10b,10c-dihydropyrene, pyrene, 9,9'-spirobi[fluorene].

5. The polyaromatic polymer according to any of the preceding claims, wherein the multifunctional moiety MA is independently selected from 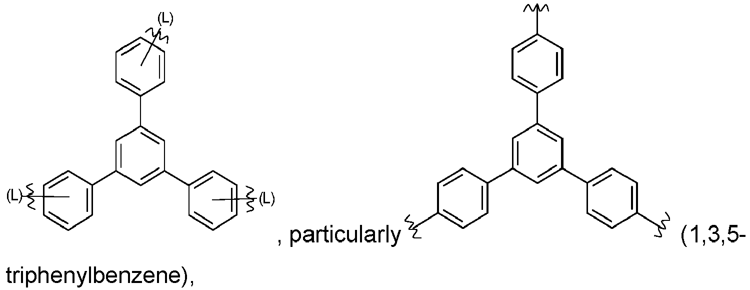 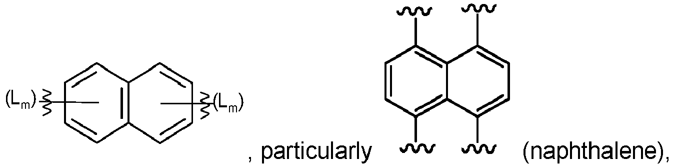 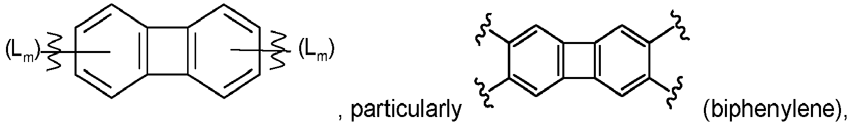 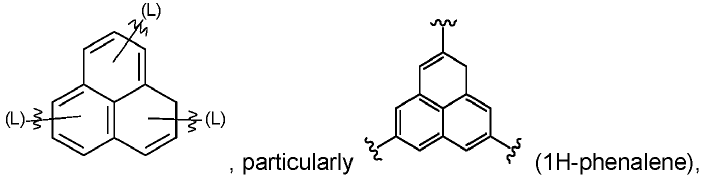 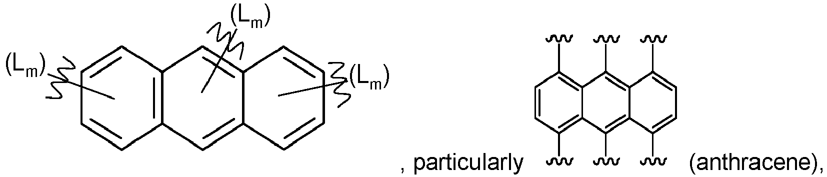 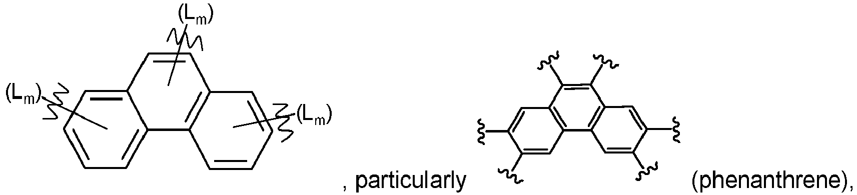 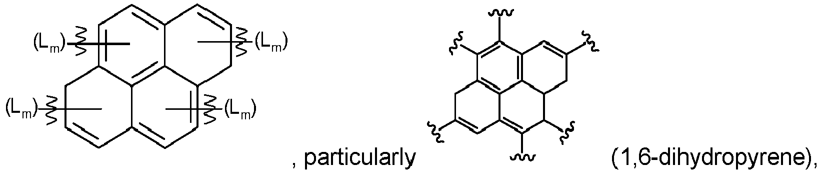 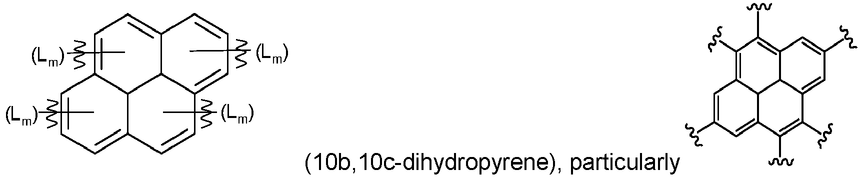 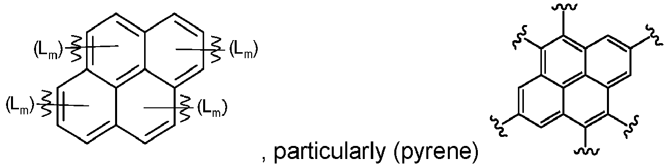 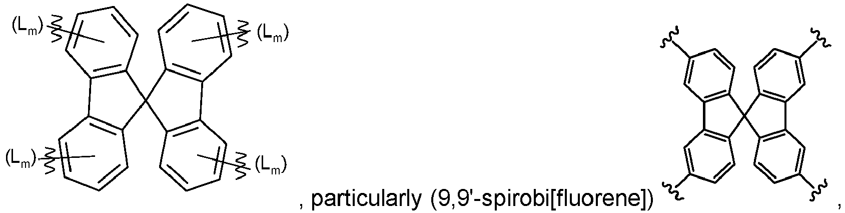 wherein
(L) or (Lₘ) indicates a bond to the linear unit L,
each m is independently selected from 0, 1 and 2, and the sum of all m is 3, 4, 5 or 6, particularly 3 or 4, more particularly 3.

6. The polyaromatic polymer according to any of the preceding claims, wherein each bifunctional aromatic moiety BA is independently selected from a moiety of formula 2 or 3, particularly from a moiety of formula 2a, 2b or 3, 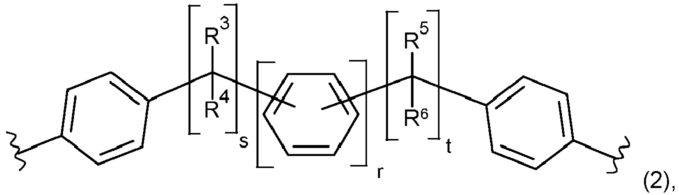 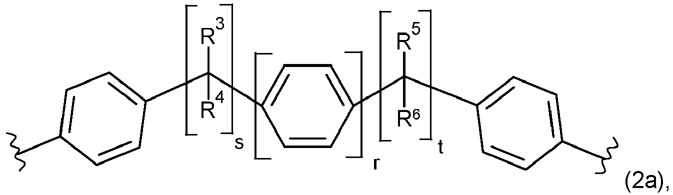 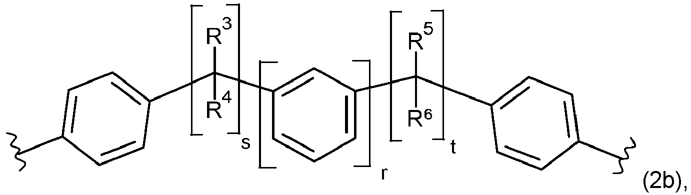 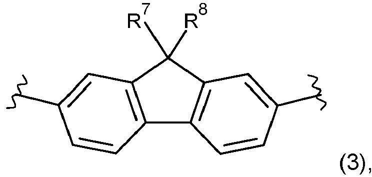 wherein
R³, R⁴, R⁵ and R⁶ are independently of each other selected from H, F, C₁₋₆-alkyl, partly or fully fluorinated C₁₋₆-alkyl,
R⁷ and R⁸ are independently of each other selected from H, F, C₁₋₆-alkyl,partly or fully fluorinated C₁₋₆-alkyl,
s and t are independently of each other an integer between 0 and 4,
r is an integer between 0 and 3, particularly 0 and 2, more particularly 0 and 1, particularly
each bifunctional aromatic moiety BA is independently selected from

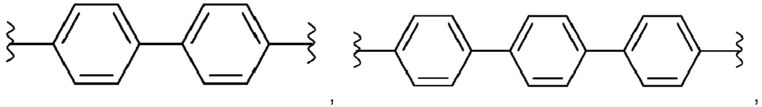

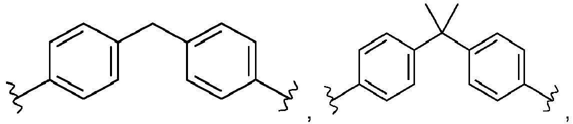

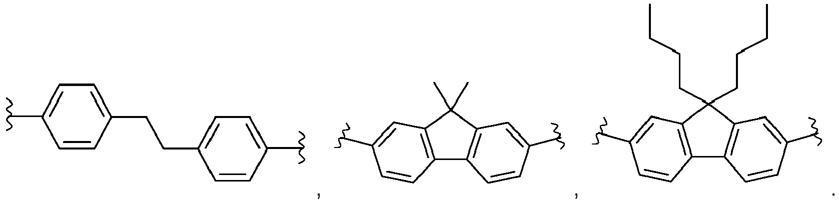

7. The polyaromatic polymer according to any of the preceding claims, wherein the cationic group CG is selected from a moiety of formula 1a, 1b, 1c, 1d, or 4, 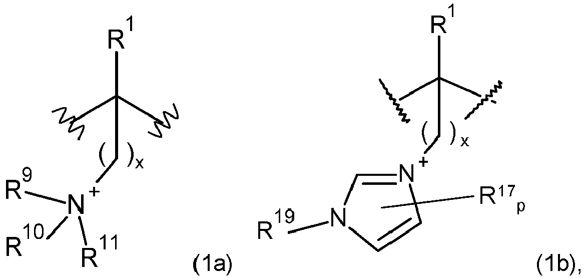 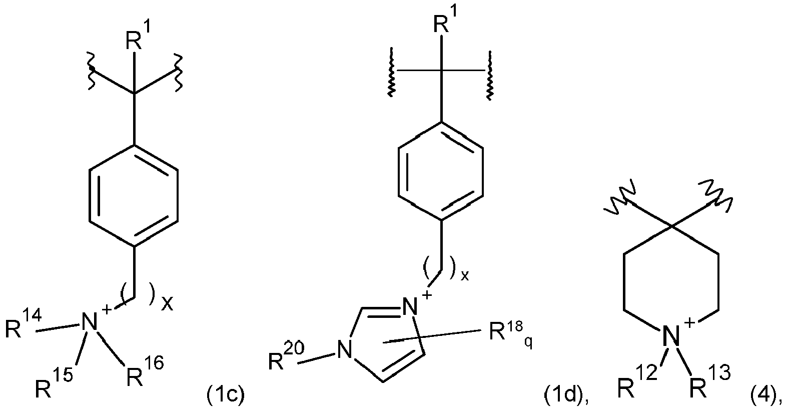 wherein
R¹ is a fully or partly fluorinated C₁₋₆-alkyl, particularly a fully fluorinated C₁₋₆-alkyl, more particularly a fully fluorinated C₁₋₃-alkyl, even more particularly -CF₃,
R⁹, R¹⁰, R¹¹, R¹⁴, R¹⁵ and R¹⁶ are independently of each other selected from H, C₁₋₆-alkyl, phenyl,
R¹² and R¹³ are independently of each other selected from H, C₁₋₆-alkyl, phenyl, C₃₋₁₀-cycloalkyl, or
R¹² and R¹³ are connected to each other to form a cycloalkyl comprising 4 to 10 C atoms,
R¹⁷ and R¹⁸ are independently selected from C₁₋₆-alkyl,
p and q are an integer between 0 and 3, particularly 0,
R¹⁹ and R²⁰ are independently selected from H and C₁₋₆-alkyl,
x is an integer between 0 and 12, particularly between 0 and 8, more particularly between 6 and 8,
z is 0 or 1, particularly 1.

8. A precursor comprising
- at least one multifunctional aromatic moiety MA that comprises, particularly consists of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- neutral groups NG that are independently selected from a moiety of formula 1' or 4', 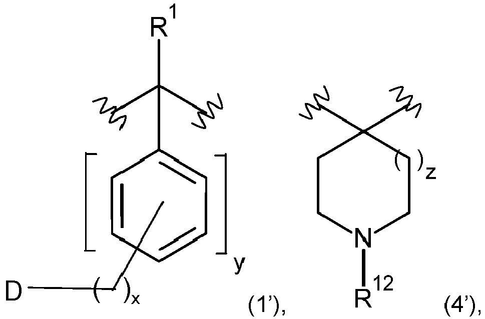
wherein
R¹ is a fully or partly fluorinated C₁₋₆-alkyl, particularly -CF₃,
R¹² is selected from H, C₁₋₁₂-alkyl, phenyl, C₃₋₁₀-cycloalkyl,
D is a leaving group, particularly a leaving group selected from -I, -Br, -Cl and -OH,
y is 0 or 1,
x is an integer between 0 and 12, particularly 0 and 8, more particularly 6 and 8,
z is 0 or 1, particularly 1,
- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl,
wherein
- one or more CG and one or more BA form a linear unit L, and
- MA is connected to 3 to 6, particularly 3 to 4, more particularly 3, linear units L.

9. The precursor according to claim 11, wherein the neutral group NG is independently selected from a moiety of formula 1", 1'" or 4", 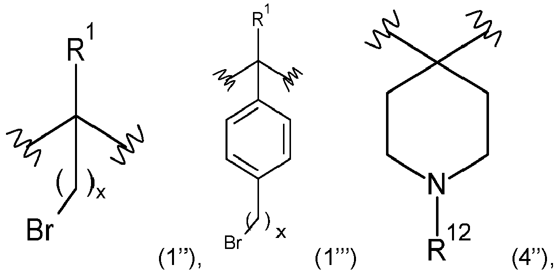 wherein
R¹ is a fully or partly fluorinated C₁₋₆-alkyl, particularly -CF₃,
R¹² is selected from H, C₁₋₆-alkyl, phenyl, C₃₋₁₀-cycloalkyl, particularly C₁₋₄-alkyl,
x is an integer between 0 and 12, particularly 0 and 8, more particularly 6 and 8.

10. A precursor obtained by a reaction of a reaction mixture comprising
- at least one multifunctional aromatic moiety MA that comprises, particularly consist of, 2 to 6, particularly 2 to 4, cyclic hydrocarbon moieties, wherein MA may be unsubstituted or substituted by one or more substituents independently selected from a C₁₋₂₀-alkyl, particularly a C₁₋₆-alkyl,
- a ketone independently selected from a moiety of formula 1k or 4k, 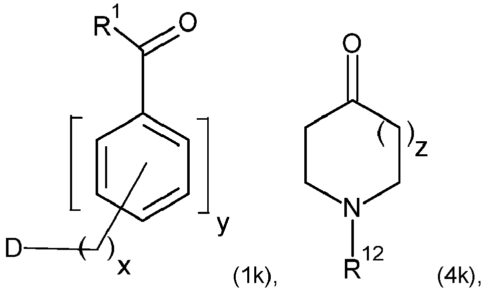
wherein
R¹ is a fully or partly fluorinated C₁₋₆-alkyl, particularly -CF₃,
D is a leaving group, particularly a leaving group selected from -I, -Br, -Cl and -OH,
R¹² is selected from H, C₁₋₁₂-alkyl, phenyl, C₃₋₁₀-cycloalkyl,
y is 0 or 1,
x is an integer between 0 and 12, particularly 0 and 8, more particularly 6 and 8, z is 0 or 1, particularly 1,
- bifunctional aromatic moieties BA that are independently selected from a moiety that comprises 2 to 5, particularly 2 to 3, cyclic hydrocarbon moieties, wherein BA may be unsubstituted or substituted by one or more substituents independently selected from C₁₋₁₀-alkyl, -O-C₁₋₁₀-alkyl, a fully or partly fluorinated C₁₋₁₀-alkyl wherein the reaction mixture has a pH < 1.

11. The precursor according to claim 13, wherein
- the ratio of the sum of the molar amounts of BA and MA to the molar amount of the ketone is between 0.8 and 1.2, particularly 1:1, and/or
- the ratio of the molar amount of BA to the molar amount of the ketone is between 50:100 and 100:100, particularly between 95:100 and 99.5:100, and/or
- the ratio of the molar amount of MA to the sum of the molar amounts of the ketone and BA is between 0.1:100 and 50:100, particularly between 0.5:100 and 5:100, more particularly 1:100.

12. A polyaromatic polymer obtained by a reaction of a reaction mixture comprising
- the precursor according to any of claims 8 to 11, and
- a reactant selected from
∘ a halogenated C₁₋₁₂-alkyl, a halogenated phenyl, or a halogenated C₃₋₁₀-cycloalkyl, or
∘ N(R²)₃, P(R²)₃, with R² being defined as above, or
∘ piperidyl, pyrrolidinyl, imidazolyl, pyrazolyl or imidazolidinyl.

13. The polyaromatic polymer according to claim 12, wherein the ratio of the molar amount of the reactant to the molar amount of the neutral group NG or to the molar amount of the ketone is 1:1 to 3:1, particularly 1.5:1 to 3:1, more particularly 3:1.

14. An anion exchange membrane comprising a polyaromatic compound according to any of claims 1 to 7 or 12 to 13 and a suitable counterion.

15. The polyaromatic polymer according to any of claims 1 to 9 or 12 to 13, wherein the polyaromatic polymer comprises one or more counterions, particularly selected from OH⁻, Cl⁻, Br⁻, I⁻, CO₃²⁻, HCO₃⁻, TFA⁻ (CF₃CO₂⁻), TFSA⁻ (CF₃SO₃⁻), BF₄⁻, PF₆⁻, more particularly OH⁻ and Cl⁻, or
the anion exchange membrane according to claim 14, wherein the counterion is selected from OH⁻, Cl⁻, Br⁻, I⁻, CO₃²⁻, HCO₃⁻, TFA⁻ (CF₃CO₂⁻), TFSA⁻ (CF₃SO₃⁻), BF₄⁻, PF₆⁻, particularly OH⁻ and Cl⁻.
